Europäisches Patentamt

**European Patent Office**

**Office européen des brevets**

(11) Veröffentlichungsnummer: **0 053 227**
**A1**

# EUROPÄISCHE PATENTANMELDUNG

(21) Anmeldenummer: **81106785.9**

(22) Anmeldetag: **31.08.81**

(51) Int. Cl.³: **G 01 J 5/04**, C 10 B 21/10

---

(30) Priorität: **03.12.80 DE 3045508**

(43) Veröffentlichungstag der Anmeldung: **09.06.82**
**Patentblatt 82/23**

(84) Benannte Vertragsstaaten: **BE FR GB IT NL**

(71) Anmelder: **RUHRKOHLE AKTIENGESELLSCHAFT,
Rellinghauser Strasse 1 Postfach 10 32 62,
D-4300 Essen 1 (DE)**

(72) Erfinder: **Stewen, Wilhelm, Dr.-Ing., Gibbenhai 8,
D-4600 Dortmund-Eichlinghofen (DE)**

---

(54) **Vorrichtung zur Temperaturmessung von Koksofenkammerwänden.**

(57) Nach der Erfindung sollen Beheizungsschwierigkeiten an Koksöfen durch eine an der Druckstange befestigte Optik ermittelt werden, die beim Koksdrücken mit der Druckstange durch den Ofen hindurch bewegt wird. Mit der Optik werden Temperaturabweichungen an den Koksofenwänden ermittelt.

EP 0 053 227 A1

## Vorrichtung zur Temperaturmessung von Koksofenkammerwänden

Die Erfindung betrifft eine Vorrichtung zur Temperaturmessung von Koksofenkammerwänden. Die Temperatur der Koksofenkammerwände bestimmt den Verkokungsvorgang. Die Koksofenkammerwände werden über benachbarte Heizwände aufgeheizt, wobei die großen Flächen der Kammerwände so beheizt werden müssen, daß ein gleichmäßig ausgegarter Koks anfällt. Gleichmäßig ausgegarter Koks hat überall den gleichen Restgehalt an flüchtigen Bestandteilen. Voraussetzung dafür ist, daß jeder Stelle der Kammerwand die dem Wärmebedarf dieser Stelle entsprechende Wärmemenge durch die Verbrennung der Heizgase zugeführt wird. Die Heizgase werden in der Heizwand durch Heizzüge in senkrechter Richtung von unten nach oben geführt und verbrennen zum Teil in unterschiedlicher Höhe des Heizzuges unter Luftüberschuß. Durch die Unterteilung der Heizwände in eine große Zahl von Heizzügen wird erreicht, daß die großen Gasmengen geregelt und über die ganze Heizwand richtig verteilt geführt werden. Die Heizzüge dienen dazu, die zuzuführenden Wärmemengen in der Längsrichtung der Heizwand entsprechend dem infolge der Konizität der Ofenkammern zur Koksseite hinsteigenden Wärmebedarf zu dosieren (horizontale Verteilung). Wichtig ist außerdem, daß in jedem Heizzug in senkrechter Richtung die Wärmeintensität gleichmäßig verteilt ist.

Weitere wesentliche Maßnahmen zur Sicherstellung einer gleichmäßigen Beheizung ergeben sich aus der Art des für die Beheizung verwendeten Brennstoffes. Schwachgasflammen, die lang und nicht leuchtend sind, fördern eine gleichmäßige Beheizung. Starkgas hat dagegen eine kurze leuchtende Flamme, so daß die Wärmeverteilung ungleichmäßig wird. Die Beheizung mit Starkgas erfordert daher verschiedene Maßnahmen zur Vergleichmäßigung der Beheizung. Dazu gehören unter anderem eine Verteilung der Gasdüsen in den einzelnen Zügen auf verschiedene Höhen, Zumischung inerter Gase (Abgase) zu den Verbrennungsgasen oder stufenweise Zuführung der Verbrennungsluft. Ferner bedingen die verschiedenartigen Zuführungen der bekannten Koksofenbauarten eine Anzahl besonderer Maßnahmen zur gleichmäßigen Beheizung; z.B. wird das Heizgas bei kopfbeheizten Öfen aus Sammelleitungen zugeführt, die an der Vorderseite der Öfen, den Ofenköpfen, verlaufen. Starkgas fließt in Verteilungskanäle, die zwischen der Ofenkammer und dem dazugehörigen Regenerator liegen, und verteilt sich von hier auf die einzelnen Heizzüge. Die für jeden Heizzug erforderliche Gasmenge wird durch kalibrierte Steindüsen in der Brennerebene eingestellt.

Andere Besonderheiten ergeben sich bei Koksöfen mit z.B. Zwillingszugssystemen oder sog. Gruppenzugöfen.

Bei allen Koksöfen erfolgt die Beheizungskontrolle in der Regel durch die Messung der Düsensteintemperatur in den Heizzügen der Heizwand , also auf der der Einsatzkohle abgewandten Seite der Kammerwand. Diese Messung erfolgt mit Pyropto durch Bedienungsleute und ist einerseits durch einen erheblichen Arbeitsaufwand und andererseits durch eine relativ große Unschärfe bezüglich der gleichmäßigen Beheizung geprägt. Die Unschärfe resultiert aus dem Abstand der Temperaturmeßstelle von der mit der Kohle in Berührung kommenden Kammerwandfläche. Die gleichmäßige Temperatur dieser Kammerwandfläche insbesondere auf der der Einsatzkohle zugewandten Seite ist jedoch für die gleichmäßige Ausgarung des Kokses maßgebend. In relativ großen Abständen wird deshalb auch die Temperatur an diesen Kammerwandflächen gemessen. Das geschieht durch die Füllöcher gleichfalls mit Pyropto, beeinträchtigt den Ofenbetrieb jedoch in ganz erheblichem Maße.

Der Erfindung liegt daher die Aufgabe zugrunde, eine Vorrichtung zu schaffen, mit der sich eine Beheizungskontrolle der Kammerwände mit möglichst geringem personellem Aufwand und großer Genauigkeit mit jeder Manipulation des Ofens gekoppelt auf der der Einsatzkohle zugewandten Seite durchführen läßt.

Nach der Erfindung wird das durch mindestens ein Pyrometer mit vorgeschalteter, an der Druckstange befestigter Optik erreicht. Mit der Druckstange wird der ausgegarte Koks einer jeden Ofenkammer aus der Ofenkammer herausgedrückt. Dabei bewegt die Druckstange einen den Koks vor sich herschiebenden Schild durch die Ofenkammer und wird die Druckstange durch die ganze Ofenkammer hindurchbewegt. Die erfindungsgemäße Befestigung der dem Pyrometer vorgeschalteten Optik an der Druckstange bewirkt, daß die Optik sich gemeinsam mit der Druckstange durch die Ofenkammer bewegt. Auf diesem Wege erfaßt die Optik die gesamte Breite einer Kammerwandfläche. Zweckmäßigerweise ist die Optik dazu senkrecht zur Kammerwand montiert, d.h. quer zur Druckstangenlängsachse.

Vorzugsweise wird mittels verschiedener Pyrometer und vorgeschalteter Optiken zugleich die Temperatur an beiden einander gegenüberliegenden Ofenkammerwandflächen gemessen. Das geschieht dann mit ortsfest
installierten Optiken. Wahlweise kann jedoch auch
eine bewegliche Optik eingesetzt werden, die in Intervallen gegen jede der gegenüberliegenden Ofenkammerwandflächen geschwenkt wird und nach jedem Schwenkvorgang eine Temperaturmessung erlaubt. Dadurch entstehen Temperaturmeßstellen an jeder Ofenkammerwand,
die entsprechend dem Schwenkvorgang einen Abstand voneinander aufweisen. Nach der Erfindung ist der Schwenkvorgang so gewählt, daß der Abstand zwischen 2 benachbarten Temperaturmeßstellen an einer Ofenkammerwandfläche das Maß der Teilung der Heizzüge der zugehörigen
Heizwand nicht überschreitet.

In einer weiteren bevorzugten Ausgestaltung der Erfindung sind für jede Ofenkammerwandfläche jeweils 2
Pyrometermeßstellen mit zugehöriger Optik annähernd
in einem Abstand an der Druckstange befestigt, der
gleich der Höhe des Kohlebesatzes ist, so daß die Temperatur am oberen und unteren Ende der Ofenkammerwandfläche gemessen wird. Das ist vor allem für Koksöfen
mit senkrecht von unten nach oben durch die Heizzüge
geführten Heizgasen vorgesehen, um einen unerwünschten
Temperaturabfall in vertikaler Richtung an den Ofenkammerwandflächen zu messen.

Wahlweise ist anstelle der beiden für jede Ofenkammerwandfläche vorgesehenen ortsfesten Pyrometer auch ein
in vertikaler Richtung mit der Optik bewegbares Pyrometer vorgesehen oder es treten zusätzlich zu den
beiden für jede Ofenkammerwandfläche vorgesehenen ortsfesten Pyrometern noch weitere Pyrometermeßstellen mit
Optik hinzu. Die in vertikaler Richtung bewegliche Optik ermöglicht beliebig viele Meßpunkte in vertikaler
Richtung. Desgleichen lassen sich eine Vielzahl gewünschter Meßpunkte in vertikaler Richtung mit einer entsprechenden Vielzahl ortsfester Optiken erzielen.

In weiterer Ausbildung der Erfindung besteht die dem Pyrometer vorgeschaltete Optik aus einem von einem Kühlmantel umschlossenen Lichtleiterkabel mit vorgeschaltetem Quarzfenster. Das Quarzfenster ist bereits von sich aus hitzebeständig und kann durch ein Vorziehen des Kühlmantels noch zusätzlich gegen unerwünschte Wärmeeinwirkung geschützt werden. Der Kühlmantel ist in seiner einfachsten Ausführung lediglich als hitzebeständiger Mantel ausgelegt. Darüber hinaus besitzt der Kühlmantel vorzugsweise eine Wasserkühlung oder Luftkühlung. Im Falle der Luftkühlung ergeben sich weitere Vorteile, wenn die dem Kühlmantel zugeführte Luft zumindest teilweise am Quarzfenster gegen das Quarzfenster wieder austritt. In diesem Fall bewirkt die austretende Kühlluft zugleich eine Kühlung des Quarzfensters und dessen Freibleiben von Staub bzw. Kohlepartikeln. Im übrigen läßt sich einer denkbaren Verschmutzung der Quarzfenster mit der Auslegung der Pyrometer als Quotientenpyrometer Rechnung tragen.

In der Zeichnung ist ein Ausführungsbeispiel der Erfindung dargestellt. Es zeigen:

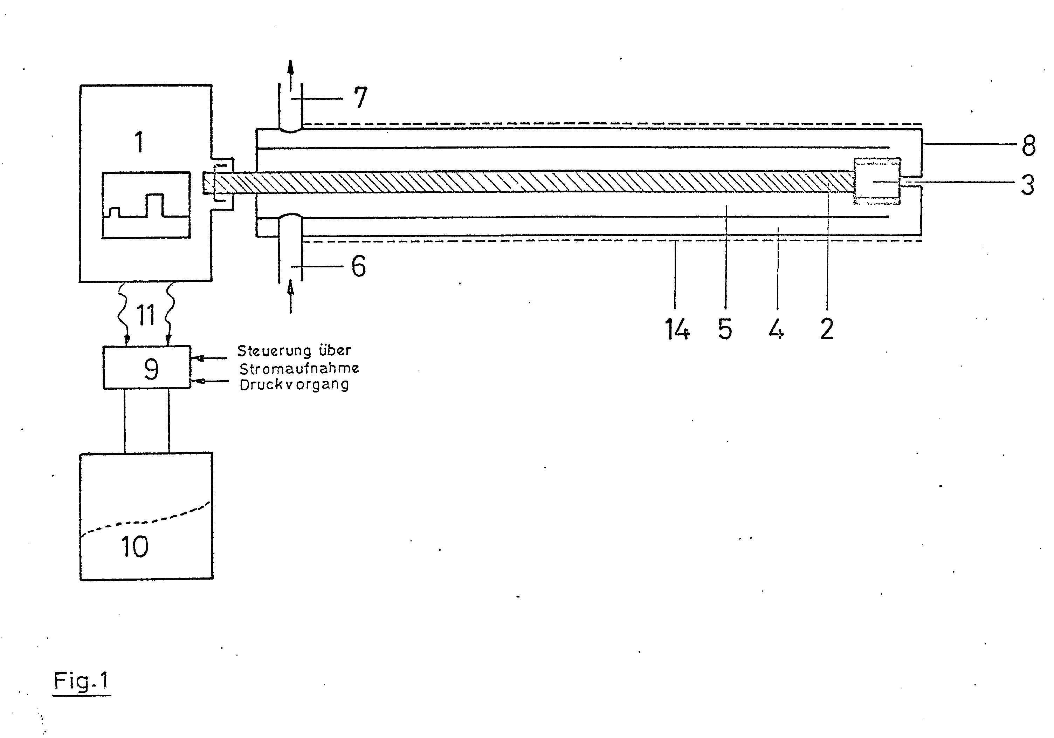

Figur 1 eine schematische Darstellung des erfindungsgemäßen Quotientenpyrometers.

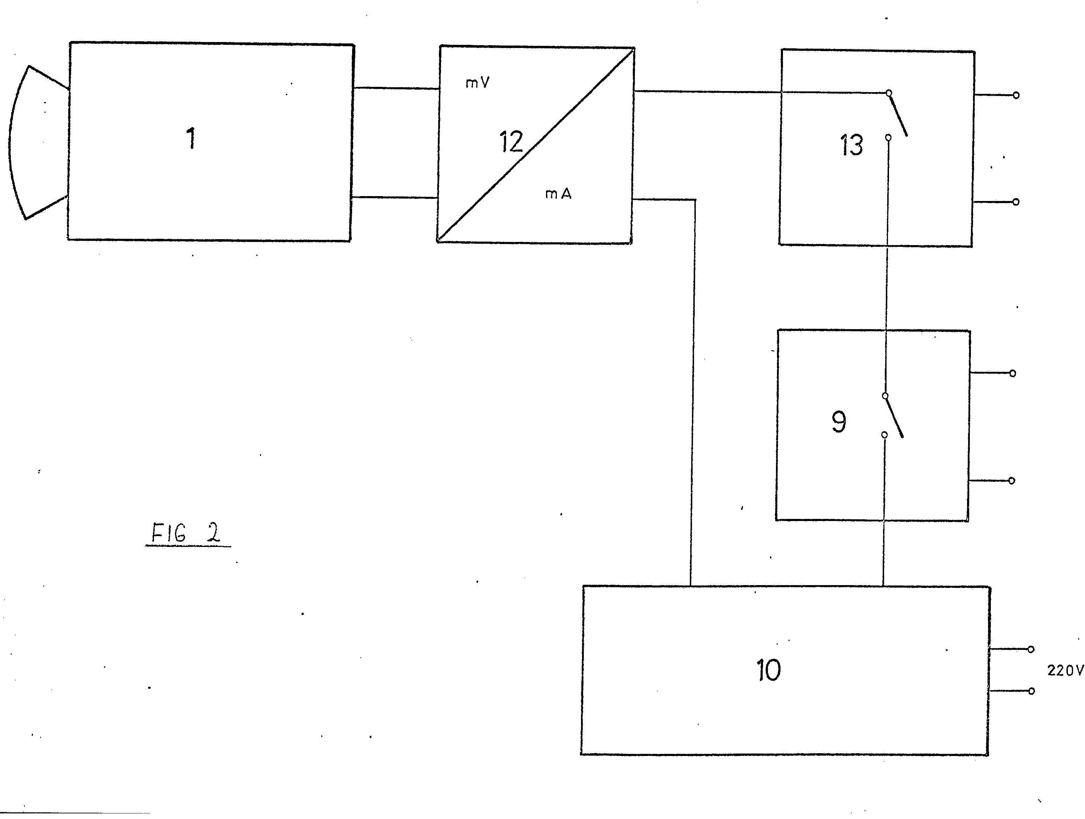

Figur 2 ein Blockschaltbild für den Quotientenpyrometer.

Nach der Erfindung sind an einer nicht dargestellten Druckstange 4 erfindungsgemäße Pyrometer mit vorgeschalteter Optik befestigt. Die Verbindung zur Druckstange wird bevorzugt über Distanzstücke mit geringer Wärmeleitfähigkeit hergestellt. Bei Druckstangen in Hohlraumkonstruktion kann das Lichtleiterkabel auch in der Druckstange geführt werden. Jeweils 2 Pyrometer mit vorgeschalteter Optik liegen einander beiderseits an der Druckstange gegenüber und sind mit ihrer Optik voneinander weg und senkrecht von der Druckstange weg gegen die Vertikalebene der Koksofenkammern gerichtet. Jeweils 2 einander gegenüberliegende Paare von Quotientenpyrometern und Optiken sind in vertikalem Abstand voneinander an der Druckstange befestigt, so daß eine nachfolgende Temperaturmessung an den oberen und unteren Enden der Ofenkammerwandflächen stattfindet.

Jedes Pyrometer ist als Quotientenpyrometer 1 ausgelegt. Als Optik besitzt jedes Quotientenpyrometer 1 einen Glasfaserlichtleiter 2 mit vorgeschaltetem Fenster 3, das aus Quarz oder einem anderen hitzebeständigen, durchsichtigen Material besteht.

Jedes Quotientenpyrometer ist an dem dem Schild abgewandten Ende der Druckstange befestigt. Der Lichtleiter 2 ist so lang ausgelegt, daß das vordere Ende des Lichtleiters 2 mit dem Fenster 3 dicht hinter dem Schild am vorderen Ende der Druckstange endet. Der Lichtleiter 2 besteht aus mehreren nebeneinander angeordneten Glasfaserkabeln, die jeweils einen inneren Durchmesser von ca. 1 mm haben und an denen das Fenster 3 angeklebt ist. Im Ausführungsbeispiel beträgt die Anzahl der Glasfaserkabel 5. Statt der 5 Glasfaserkabel mit ca. 1 mm kann auch ein einzelnes Glasfaserkabel mit 5 mm Innendurchmesser verwendet werden. Die 5 Glasfaserkabel erlauben gegenüber dem einzelnen, dickeren Glasfaserkabel eine bessere Kühlung.

Die Glasfaserkabel sind flexibel und lassen ohne weiteres eine Abwinkelung des vorderen am Schild angeordneten Endes zu. In der Zeichnung ist der Lichtwellenleiter vereinfacht ohne Abwinkelung dargestellt. Die Abwinkelung dient dazu, bei einer nachfolgenden Temperaturmessung an einer Ofenkammerwandfläche die senkrecht von dieser Ofenkammerwandfläche ausgehenden Strahlen zu messen.

Das Quarzfenster läßt eine Temperaturbelastung von 400 °C zu. Es ist 3 - 10 cm dick und läßt sich mit ausreichender Sicherheit mit Klebern an den Lichtleiter 2 verkleben, die bis zu 300 °C temperaturbeständig sind. Die Lichtleiter sind mit Hytrel ummantelt, das von sich aus einer Temperaturbelastung bis ca. 150 °C standhält, ohne daß die innenliegenden Glasfaserkabel dadurch beeinträchtigt werden. Darüber hinaus ist ein Kühlmantel aus VA-Stahl vorgesehen.

Der Kühlmantel 4 erstreckt sich über die ganze Länge, mit der der Lichtleiter 2 beim Drücken des Kokses gemeinsam mit der Druckstange in die Koksofenkammer hineinbewegt wird. Der Kühlmantel 4 besitzt ein Innenrohr 5 geringeren Durchmessers, so daß zwischen dem Lichtleiter 2 und dem Innenrohr 5 ein Abstand und zwischen dem Innenrohr 5 und dem Außenmantel des Kühlmantels 4 ein Abstand besteht, der die Zuführung eines Kühlmediums, im Ausführungsbeispiel Wasser, durch eine Zuflußöffnung 6 und ein Abfließen durch einen Abfluß 7 ermöglicht. Die Zuführung 6 mündet an dem Innenrohr und zwingt das Kühlwasser, zunächst an dem Lichtleiter 2 entlangzuströmen, bis es am Fenster 3 aus dem Innenmantel 5 austreten und am Außenmantel des Kühlmantels 4 entlang zum Abfluß 7 strömen kann.

Der Kühlmantel 4 ist über das Fenster 3 hinaus, wie mit 8 bezeichnet, vorgezogen und gewährt dadurch eine besondere Kühlung des Fensters 3.

In einem weiteren nicht dargestellten Ausführungsbeispiel ist ein Kühlmantel 4 ohne Innenrohr 5 und Abfluß 7 vorgesehen. Durch den Zufluß 6 wird dann Luft oder ein anderes gasförmiges Kühlmittel zugeführt, das an dem am Fenster 3 vorgezogenen Ende des Kühlmantels gegen das Fenster durch nicht dargestellte Austrittsöffnungen austritt. Das bewirkt eine ständige Reinigung des Fensters, d.h. Freihalten des Fensters von Verschmutzung und eine gleichzeitige Kühlung des Fensters.

- 8 -                                    0053227

Zum Korrosionsschutz ist der Kühlmantel mit einer Binde
aus $ZrO_2$ bzw. Asbest oder anderen geeigneten Material
auf Keramikbasis 14 versehen.

Falls erforderlich kann sowohl in einen Mantel Luft für
die Spülung des Fensters und Kühlwasser in einem zweiten
Mantel wie beschrieben aufgegeben werden.

Wegen der rauhen Einsatzbedingungen des Kokereibetriebes
ist das fensterseitige Ende der Optik zusätzlich mit
Seitenblechen gegen seitliche mechanische Einwirkungen
geschützt. Ferner ist der Lichtleiter 2 am meßumformerseitigen Ende, d.h. an dem dem Quotientenpyrometer 1
zugewandten Ende mit einer optischen Kupplung versehen,
so daß der Lichtleiter bei etwaiger Beschädigung leicht
ausgetauscht werden kann. Das Austauschen des Lichtleiters bedingt eine entsprechend lösbare Verbindung im
Kühlmantel und/oder eine lösbare Verbindung des Kühlmantels 4 an der Druckstange. Das Quotientenpyrometer 1
ist fest an der Druckstelle montiert und für Meßwellenlängen $0,7 - 1,4\,\mu$m für Temperaturbereiche zwischen
650 und 1 400 $^{o}$C oder 800 und 1800 $^{o}$C ausgelegt. Quotientenpyrometer sind optische Temperaturmeßgeräte, bei
denen die Temperaturmessung auf 2 eng beieinanderliegenden Wellenlängen erfolgt, aus deren Meßgrößen der Quotient
gebildet wird. Dadurch wird der durch den Emissionsfaktor
bedingte Anzeigefehler erheblich reduziert. Außerdem werden Einflüsse durch Verunreinigungen der Optik, d.h. des
Fensters 3, Wasserdampf und ähnliches weitgehend ausgeschaltet.

Das Quotientenpyrometer 1 wird in Zeitintervallen von
einem Zeitrelais 9 in Gang gesetzt. Die Steuerung des
Zeitrelais erfolgt über die Stromaufnahme beim Druckvorgang, d.h. Koksdrücken. Die sich aus der intervallmäßigen Temperaturmessung ergebenden Meßwerte werden
mit einem Schreiber 10 aufgezeichnet.

- 9 -

Zeitrelais 9 und Schreiber 10 sind ortsfest gegenüber der bewegbaren Druckstange montiert. Die notwendige Wirkverbindung mit dem Quotientenpyrometer 1 wird durch flexible Leitungen 11 mit nicht dargestellter Aufspulautomatik erreicht. Der Schreiber 10 ist im Führerstand der nicht dargestellten Druckmaschine angeordnet.

Bei jedem Druckvorgang erfolgt mit Beginn der Stromaufnahme mit den vom Zeitrelais gegebenen Intervallen eine berührungslose Oberflächentemperaturmessung durch jedes Quotientenpyrometer 1. Die Oberflächentemperaturen der Wände liegen in der Regel zwischen 1 000 und 1 300 $^{\circ}$C. Im Ofen selbst herrschen Temperaturen zwischen 900 und 1 100 $^{\circ}$C. Das Pyrometer 1 ist auf die von den Koksofenwänden abgehende Strahlung geeicht. Das geschieht mit Hilfe eines Körpers bekannter Strahlung. Dieser Eichvorgang wird auch als Kalibrieren der Meßvorrichtungen bezeichnet.

Die im Pyrometer 1 gemessenen Temperaturwerte fallen in Form von Spannungswerten an und werden in einem Wandler 12 in Amperewerte umgesetzt. Der Ausgang des Wandlers beträgt zwischen 0 und 20 mA.

Die Ausgangswerte gehen in den Drucker 10 der mit Wechselstrom (220 V, 50 Hz) betrieben wird. In den Stromkreis mit dem Pyrometer sind zwischen Drucker 10 und Wandler 12 das Zeitrelais 9 als Impulsgeber und ein Relais 13 geschaltet. Das Relais 13 wird bei der Stromaufnahme mit Beginn des Druckvorganges geschlossen. Das Relais 13 wird mit Wechselstrom (24 V, 50 Hz) betrieben; mit dem gleichen Strom wird das Zeitrelais 9 betrieben, das als Impulsgeber mit einem Bereich zwischen 0 - 20 Sek. arbeitet und im Ausführungsbeispiel auf 2 Sek. eingestellt ist.

0053227

- 10 -

Mit jedem einzelnen Druckvorgang wird durch die erfindungsgemäße Temperaturmessung ein Temperaturprofil aufgenommen, d.h. die Überprüfung der Beheizung erfolgt an der mit der Kokskohle in Berührung kommenden Koksofenkammerfläche und ist infolgedessen sehr viel intensiver als bei üblichen Messungen. Jede Manipulation an jedem einzelnen Ofen wird von der Aufnahme des Temperaturprofiles begleitet. Die Unsicherheiten früher manueller Messung in der Genauigkeit und in der Folge der Messungen werden ausgeschaltet. Genauigkeit und Schnelligkeit der Messungen sind extrem hoch. Es wird mit Hilfe des Druckers ein Diagramm ausgeworfen, das der Beheizungsmeister sofort und unmittelbar für die Überprüfung und Durchführung von Korrekturen verwenden kann. Durch maschinelle Temperaturmessung fallen eine Reihe manueller Tätigkeiten weg und tritt ein bedeutender Rationalisierungseffekt ein.

-1-

Patentansprüche

1. Vorrichtung zur Temperaturmessung von Koksofenkammern, gekennzeichnet durch ein Pyrometer (1)
mit vorgeschalteter, an der Druckstange befestigter Optik.

2. Vorrichtung nach Anspruch 1, gekennzeichnet durch
2 in vertikaler Richtung im Abstand voneinander
angeordnete Pyrometer (1) mit vorgeschalteter Optik für jede vertikale Koksofenkammerwandfläche.

3. Vorrichtung nach Anspruch 1 oder 2, dadurch gekennzeichnet, daß die Optik aus von einem Kühlmantel (4)
umschlossenen Lichtwellenleiterkabel (2) mit vorgeschaltetem Quarzfenster (3) besteht.

4. Vorrichtung nach Anspruch 3, dadurch gekennzeichnet,
daß der Kühlmantel (4) gegenüber dem Fenster (3)
vorgezogen ist.

5. Vorrichtung nach Anspruch 3 oder 4, gekennzeichnet
durch eine Wasserkühlung des Kühlmantels (4).

6. Vorrichtung nach Anspruch 3 oder 4, gekennzeichnet
durch eine Luftkühlung des Kühlmantels (4).

7. Vorrichtung nach einem oder mehreren der Ansprüche 3, 4, 6 gekennzeichnet durch eine Einwegluftkühlung mit gegen das Fenster (3) gerichteten Austrittsöffnungen des Kühlmantels (4).

8. Vorrichtung nach einem oder mehreren der Ansprüche 1-8, dadurch gekennzeichnet, daß das Pyrometer (1) als Quotientenpyrometer ausgelegt ist.

0053227

Steuerung über
Stromaufnahme
Druckvorgang

Fig.1

0053227

FIG 2

Europäisches
Patentamt

**EUROPÄISCHER RECHERCHENBERICHT**

0053227

Nummer der Anmeldung

EP 81 10 6785

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | **EINSCHLÄGIGE DOKUMENTE** | | |
| X | <u>DE - B - 1 225 143</u> (GEW. A. VICTORIA)  * Spalten 3-5 * | 1,3,5, 6 | G 01 J 5/04 C 10 B 21/10 |
| X | <u>US - A - 3 501 380</u> (M. PERCH)  * Spalten 2,3; Figuren 1,2 * | 1,2,6, 8 | |
| X | <u>FR - A - 2 443 490</u> (CENTRE DE RECHERCHES METALLURGIQUES)  * Seiten 2,3 * | 1,2 | RECHERCHIERTE SACHGEBIETE (Int. Cl.³)  G 01 J 5/04 C 10 B 21/10 |
| A | <u>DE - B - 2 141 711</u> (HOESCH)  * Spalten 3,4; Figuren 1,2 * | 3,6 | |
| A | <u>US - A - 3 584 509</u> (W. COMPTON et al.)  * Spalten 5,6; Figur 3 * | 3,4,6 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11.03.1982 | BOEHM |

EPA form 1503.1   06.78